# EUROPÄISCHE PATENTSCHRIFT

(11) **EP 1 513 400 B1**
(45) Veröffentlichungstag und Bekanntmachung des Hinweises auf die Patenterteilung: **17.08.2016**
(21) Anmeldenummer: 03730058.9
(22) Anmeldetag: 16.05.2003
(51) Int. Cl.: A01N 25/28

(54) **MIKROKAPSEL-FORMULIERUNGEN**
MICROCAPSULE FORMULATIONS
FORMULATIONS POUR MICROCAPSULES

(30) Priorität: 29.05.2002 DE 10223916
(43) Veröffentlichungstag der Anmeldung: 16.03.2005
(73) Patentinhaber: Bayer Intellectual Property GmbH, 40789 Monheim am Rhein (DE)
(72) Erfinder: WOLF, Hilmar, 40764 Langenfeld (DE); BAUR, Peter, 65817 Eppstein (DE); ZIMMERMANN, Manfred, 40789 Monheim (DE)
(74) Vertreter: BIP Patents
(86) Internationale Anmeldenummer: PCT/EP2003/005163
(87) Internationale Veröffentlichungsnummer: WO 2003/099005

(56) Entgegenhaltungen:
- EP-A- 0 579 052
- EP-A- 1 172 347
- WO-A-01/24631
- WO-A1-90/08468
- DE-A- 2 312 059
- US-A- 3 577 515

## Beschreibung

Die vorliegende Erfindung betrifft neue Mikrokapsel-Formulierungen, ein Verfahren zu deren Herstellung und deren Verwendung zur Applikation von agrochemischen Wirkstoffen.

Es ist bereits bekannt, die biologische Wirksamkeit von agrochemischen Wirkstoffen dadurch zu steigern, dass man anwendungsfertige Spritzbrühen von agrochemischen Wirkstoffen mit Penetrationsförderern oder Formulierungen von Penetrationsförderern versetzt und diese Gemische dann ausbringt. Nachteilig an diesem Verfahren ist jedoch, dass die Komponenten unmittelbar vor der Applikation vermischt werden müssen. Eine gleichmäßige Verteilung des Penetrationsförderers in der Zubereitung ist dabei nicht immer gewährleistet. Außerdem ist die exakte Dosierung der Komponenten arbeitsaufwendig.

Weiterhin sind schon Pflanzenbehandlungsmittel beschrieben worden, die neben den agrochemischen Wirkstoffen und üblichen Zusatzstoffen auch Penetrationsförderer in der Formulierung enthalten (siehe z.B. EP 0 579 052). Zubereitungen dieses Typs weisen aber häufig eine für praktische Zwecke unzureichende Stabilität auf. So wird in vielen Fällen beobachtet, dass sich größere Wirkstoffkristalle bilden und dadurch die Ausbringung der Spritzbrühen beeinträchtigt oder ganz unmöglich gemacht wird.

WO 90/08468 beschreibt einen Penetrationsförderer, der zusammen mit einem agrochemischen Wirkstoff verkapselt ist.

Es wurden nun neue Mikrokapsel-Formulierungen gefunden, bestehend aus
A) einer teilchenförmigen, dispersen Phase von Mikrokapseln, die
   - Hüllen aus Polyharnstoff und/oder Polyurethan in mittleren Schichtdicken zwischen 5 und 20 nm aufweisen und
   - als Kapselfüllung aus - mindestens einen Penetrationsförderer sowie - mindestens einem Zusatzstoff ausgewählt aus der Gruppe der anionischen oder neutralen Emulgatoren und der aromatischen Kohlenwasserstoffe als Lösungsmittel, bestehen,
      und
B) einer Suspension, die
   - mindestens einen festen, agrochemischen Wirkstoff,
   - Zusatzstoffe,
   - Wasser und
   - gegebenenfalls einen oder mehrere bei Raumtemperatur flüssige, agrochemische Wirkstoffe
   enthält.

Weiterhin wurde gefunden, dass sich erfindungsgemäße Mikrokapsel-Formulierungen herstellen lassen, indem man
a) in einem ersten Schritt ein Gemisch aus
   - mindestens einem Penetrationsförderer,
   - mindestens einem Poly-Isocyanat aus der Gruppe der aliphatischen Isocyanate, aromatischen Isocyanate, cycloaliphatischen Isocyanate und/oder dem Isocyanat der Formel 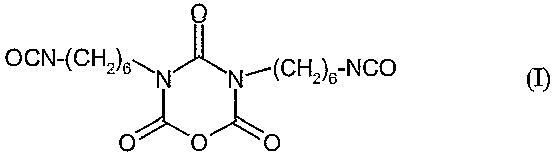 und
   - mindestens einem Zusatzstoff ausgewählt aus der Gruppe der anionischen oder neutralen Emulgatoren und der aromatischen Kohlenwasserstoffe als Lösungsmittel in einer wässrigen Phase aus
   - einem oder mehreren Schutzkolloiden,
   - Wasser und
   - gegebenenfalls einem oder mehreren Emulgatoren dispergiert,
b) der dabei anfallenden Mischung in einem zweiten Schritt mindestens ein Diamin, Polyamin, Dialkohol, Polyalkohol und/oder Aminoalkohol zufügt,
   und
c) die erhaltene Mikrokapsel-Dispersion in einem dritten Schritt gegebenenfalls ganz oder teilweise von der flüssigen Phase befreit und dann mit einer Suspension aus
   - mindestens einem festen, agrochemischen Wirkstoff,
   - Zusatzstoffen und
   - gegebenenfalls einem oder mehreren bei Raumtemperatur flüssigen, agrochemischen Wirkstoffen
verrührt.

Außerdem wurde gefunden, dass die erfindungsgemäßen Mikrokapsel-Formulierungen sehr gut zur Applikation der enthaltenen agrochemischen Wirkstoffe auf Pflanzen und/oder deren Lebensraum geeignet sind.

Schließlich wurde gefunden, dass sich Mikrokapsel-Zubereitungen, die
- Hüllen aus Polyharnstoff und/oder Polyurethan in mittleren Schichtdicken zwischen 5 und 20 nm aufweisen und
- als Kapselfüllung
   - mindestens einen Penetrationsförderer sowie
   - gegebenenfalls Zusatzstoffe
   enthalten,
   gegebenenfalls im Gemisch mit
- einem oder mehreren Verdünnungsmitteln und/oder
- Zusatzstoffen
sehr gut zur Verbesserung der Wirksamkeit von Pflanzenbehandlungsmitteln verwenden lassen.

Überraschenderweise zeigen die erfindungsgemäßen Mikrokapsel-Formulierungen eine deutlich bessere und schnellere Bioverfügbarkeit der enthaltenen agrochemischen Wirkstoffe als entsprechende Wirkstoff-Suspensionen, in denen keine Penetrationsförderer vorhanden sind. Aufgrund des vorbekannten Standes der Technik war anzunehmen, dass sich die Aktivität der Penetrationsförderer nur dann voll entfalten kann, wenn sie in den Formulierungen frei verfügbar sind. Im Gegensatz zu den Erwartungen sind jedoch auch die mikroverkapselten Penetrationsförderer in der Lage, die Bioverfügbarkeit von agrochemischen Wirkstoffen in gleichem Maße zu erhöhen.

Die erfindungsgemäßen Mikrokapsel-Formulierungen zeichnen sich durch eine Reihe von Vorteilen aus. So können die Kombipräparate aus mikroverkapseltem Penetrationsförderer und Wirkstoff-Suspension bereits vom Hersteller in anwendungsfertiger Form in den Handel gebracht werden. Das mühsame Ansetzen einer Tankmischung unmittelbar vor der Ausbringung ist nicht erforderlich. Günstig ist außerdem, dass die erfindungsgemäßen Mikrokapsel-Formulierungen auch bei Lagerung unter Praxisbedingungen stabil sind.

Die erfindungsgemäßen Mikrokapsel-Formulierungen sind durch die in der dispersen Phase vorhandenen Mikrokapseln und die in der Suspension enthaltenen Bestandteile charakterisiert.

Bei den Hüllen der Mikrokapseln in den erfindungsgemäßen Formulierungen handelt es sich um Polyharnstoffe und/oder Polyurethane die durch Reaktion von einem oder mehreren Poly-Isocyanaten mit Diaminen, Polyaminen, Dialkoholen, Polyalkoholen und/oder Aminoalkoholen entstehen.

Als Isocyanate kommen dabei aliphatische, cycloaliphatische und aromatische Di- bzw. Polyisocyanate sowie das Isocyanat der Formel 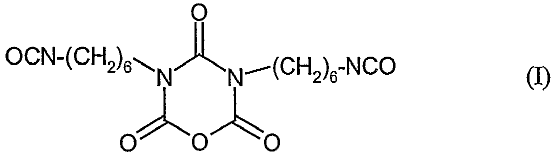 in Betracht.

### Beispielhaft genannt seien

Hexan-1,6-diisocyanat,
4,4'-Methylen-bis-cyclohexyl-isocyanat,
Toluylen-diisocyanat,
2H-1,3,5-Oxadiazin-2,4,6-(3H,5H)-trion-3,5-bis-(6-isocyanato-hex-1-yl) der Formel (I),
Diphenylmethan-diisocyanat sowie Isomere und höherfunktionelle Homologe davon.

Als Reaktionskomponenten in Frage kommende Amine sind vorzugsweise aliphatische und cycloaliphatische primäre und sekundäre Diamine und Polyamine. Als Beispiele genannt seien:
Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methylaminopropan, N-Methyl-bis-(3-aminopropyl)-amin, 1,4-Diamino-n-butan, 1,6-Diamino-n-hexan und Guanidincarbonat.

Bevorzugt sind auch Amine, die durch Reaktion der als bevorzugt genannten Isocyanate mit Wasser entstehen.

Als Reaktionskomponenten in Betracht kommende Alkohole sind vorzugsweise primäre oder sekundäre, aliphatische Dialkohole oder Polyalkohole. Als Beispiele seien genannt:
Ethandiol, Propandiol-(1,2), Propandiol-(1,3), Butandiol-(1,4), Pentandiol-(1,5), Hexandiol-(1,6), Glycerin und Diethylenglykol.

Als Reaktionskomponenten außerdem bevorzugt sind aliphatische Aminoalkohole, wie beispielsweise Triethanolamin.

Als Penetrationsförderer, die in den Mikrokapseln der erfindungsgemäßen Formulierungen enthalten sind, kommen alle üblichen Stoffe in Betracht, die in der Lage sind, das Eindringen von agrochemischen Stoffen in Pflanzen zu verbessern. Vorzugsweise in Frage kommen Mineralöle, Pflanzenöle, Ester von Pflanzenölen, Fettsäureester mit 10 bis 20 Kohlenstoffatomen im Säureteil und 1 bis 10 Kohlenstoffatomen im Alkoholteil, Ester von gesättigten oder ungesättigten Dicarbonsäuren mit 4 bis 12 Kohlenstoffatomen im Säureteil und 1 bis 8 Kohlenstoffatomen in jedem Alkoholteil, Ester von aromatischen Dicarbonsäuren mit 1 bis 8 Kohlenstoffatomen in jedem Alkoholteil, und außerdem auch Alkanol-alkoxylate.

Als Beispiele für Penetrationsförderer seien genannt:
Mineralöle,
Rapsöl, Sonnenblumenöl, Maiskernöl, Leinsamenöl, Rüböl, Olivenöl, Baumwollsaatöl,
Rapsöl-methylester, Rapsöl-ethylester, Rüböl-methylester, Rüböl-ethylester,
Ethyl-hexyl-laurat,
Bernsteinsäure-dibutylester, Adipinsäure-dibutylester, Phthalsäure-dibutylester sowie Alkanol-alkoxylate der Formel

   R-O-(AO)ₘ-R¹ (I)

   in welcher
   - R: für geradkettiges oder verzweigtes Alkyl oder Alkylen mit 4 bis 20 Kohlenstoffatomen steht,
   - AO: für einen Ethylenoxid-Rest, einen Propylenoxid-Rest, einen Butylenoxid-Rest oder für Gemische aus Ethylenoxid- und Propylenoxid-Resten oder Butylen-oxid-Resten steht,
   - m: für Zahlen von 1 bis 30 steht und
   - R¹: für Wasserstoff oder Alkyl mit 1 bis 4 Kohlenstoffatomen steht.

Eine besonders bevorzugte Gruppe von Penetrationsförderern sind Alkanolalkoxylate der Formel

R-O-(-EO-)ₚ-(-PO-)_{q}-R¹ (Ia)

in welcher
- R: die oben angegebene Bedeutung hat,
- EO: für -CH₂-CH₂-O- steht,
- PO: für 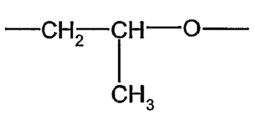 oder -CH₂-CH₂-CH₂-O- steht,
- p: für Zahlen von 0 bis 3 steht,
- q: für Zahlen von 1 bis 6 steht und
- R¹: für Wasserstoff, Methyl, Ethyl, n-Propyl, i-Propyl oder n-Butyl, i-Butyl steht.

Eine weitere besonders bevorzugte Gruppe von Penetrationsförderern sind Alkanol-Alkoxylate der Formel

R-O-(-PO-)ᵣ-(EO-)ₛ-R¹ (Ib)

in welcher
- R: die oben angegebene Bedeutung hat,
- EO: für -CH₂-CH₂-O- steht,
- PO: für 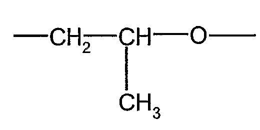 oder -CH₂-CH₂-CH₂-O- steht,
- r: für Zahlen von 1 bis 6 steht,
- s: für Zahlen von 1 bis 3 steht und
- R¹: für Methyl, Ethyl, n-Propyl, n-Butyl oder für Wasserstoff steht.

Eine weitere besonders bevorzugte Gruppe von Penetrationsförderern sind Alkanol-Alkoxylate der Formel

CH₃-(CH₂)ₜ-CH₂-O-(-CH₂-CH₂-O-)ᵤ-R¹ (Ic)

in welcher
- t: für Zahlen von 8 bis 13 steht,
- u: für Zahlen von 0 bis 3 steht und
- R¹: für Wasserstoff, Methyl, Ethyl, n-Propyl oder n-Butyl steht.

In den zuvor angegebenen Formeln steht
- R: vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für ein Alkanol-Alkoxylat der Formel (Ib) sei 2-Ethyl-hexyl-alkoxylat der Formel 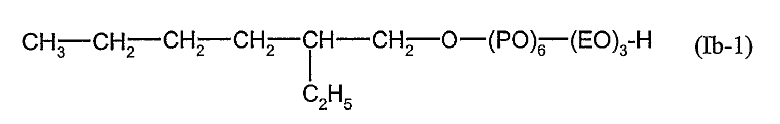 in welcher
- EO: für -CH₂-CH₂-O- steht,
- PO: für 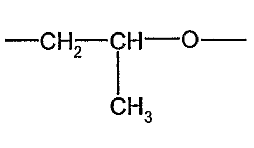 oder -CH₂-CH₂-CH₂-O- steht und
die Zahlen 6 und 3 Durchschnittswerte darstellen.

Besonders bevorzugte Alkanol-Alkoxylate der Formel (Ic) sind Verbindungen dieser Formel, in denen
- t: für Zahlen von 9 bis 12 steht und
- u: für Zahlen von 0 bis 3 steht.

Die Alkanol-Alkoxyate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Duchschnittswerte, die auch von ganzen Zahlen abweichen können.

Beispielhaft genannt sei Alkanol-Alkoxylat der Formel (Ic), in welcher
- t: für den Durchschnittswert 10,5 steht,
- u: für den Durchschnittswert 3,0 steht und
- R¹: für Methyl steht.

Die Alkanol-Alkoxylate der angegebenen Formeln sind bekannt oder lassen sich nach bekannten Methoden herstellen (vgl. WO 98-35 553, WO 00-35 278 und EP-A 0 681 865).

Als Zusatzstoffe, die in den Mikrokapseln der erfindungsgemäßen Formulierungen enthalten sind, kommen Emulgatoren und inerte organische Solventien in Frage.

Bevorzugt kommen als Emulgatoren aninonische oder neutrale Emulgatoren in Betracht. Beispielhaft genannt seien Styryl-phenol-alkoxylate.

Als inerte organische Solventien können vorzugsweise aromatische Kohlenwasserstoffe, wie Toluol, Xylol oder Solvesso^{®} vorhanden sein.

Die Suspension, die in den erfindungsgemäßen Formulierungen neben den Mikrokapseln vorhanden ist enthält einen oder mehrere bei Raumtemperatur feste, agrochemische Wirkstoffe. Unter agrochemischen Wirkstoffen sind hierbei Fungizide, Bakterizide, Insektizide, Akarizide, Nematizide, Molluskizide, Herbizide und Pflanzenwuchsregulatoren zu verstehen.

Als Beispiele für Fungizide seien genannt:
2-Anilino-4-methyl-6-cyclopropyl-pyrimidin; 2',6'-Dibromo-2-methyl-4'-trifluoro-methoxy-4'-trifluoromethyl-1,3-thiazol-5-carboxanilid; 2,6-Dichloro-N-(4-trifluoro-methylbenzyl)-benzamid; (E)-2-Methoximino-N-methyl-2-(2-phenoxyphenyl)-acetamid; 8-Hydroxychinolinsulfat; Methyl-(E)-2- {2-[6-(2-cyanophenoxy)-pyrimidin-4-yloxy]-phenyl}-3-methoxyacrylat; Methyl-(E)-methoximino[alpha-(o-tolyloxy)-o-tolyl]-acetat; 2-Phenylphenol (OPP), Ampropylfos, Anilazin, Azaconazol, Benalaxyl, Benodanil, Benomyl, Binapacryl, Biphenyl, Bitertanol, Blasticidin-S, Bromuconazole, Bupirimate, Buthiobate,
Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram, Carpropamid,
Dichlorophen, Diclobutrazol, Dichlofluanid, Diclomezin, Dicloran, Diethofencarb, Difenoconazol, Dimethirimol, Dimethomorph, Diniconazol, Dinocap, Diphenylamin, Dipyrithion, Ditalimfos, Dithianon, Dodine, Drazoxolon,
Epoxyconazole, Ethirimol, Etridiazol,
Fenarimol, Fenbuconazole, Fenfuram, Fenitropan, Fenpiclonil, Fentinacetat, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox, Fenhexamid,
Guazatine,
Hexachlorbenzol, Hexaconazol, Hymexazol,
Imazalil, Imibenconazol, Iminoctadin, Iprobenfos (IBP), Iprodion, Isoprothiolan, Iprovalicarb,
Kasugamycin,
Mancopper, Mancozeb, Maneb, Mepanipyrim, Mepronil, Metalaxyl, Metconazol, Methasulfocarb, Methfuroxam, Metiram, Metsulfovax, Myclobutanil,
Nickeldimethyldithiocarbamat, Nitrothal-isopropyl, Nuarimol,
Ofurace, Oxadixyl, Oxamocarb, Oxycarboxin,
Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon,
Quintozen (PCNB), Quinoxyfen,
Tebuconazol, Tecloftalam, Tecnazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Triflumizol, Triforin, Triticonazol, Trifloxystrobin,
Validamycin A, Vinclozolin,
Zineb, Ziram,
2-[2-(1-Chlor-cyclopropyl)-3-(2-chlorphenyl)-2-hydroxypropyl]-2,4-dihydro-[1,2,4]-triazol-3-thion
3-(1-[2-(4-[2-Chlorphenoxy)-5-fluorpyrimid-6-yloxy)-phenyl]-1-(methoximino)-methyl)-5,6-dihydro-1,4,2-dioxazin und
2-(2-[6-(3-Chlor-2-methyl-phenoxy)-5-fluor-pyrimid-4-yloxy]-phenyl)-2-methox-imino-N-methyl-acetamid.

Als Beispiele für Bakterizide seien genannt:
Bronopol, Dichlorophen, Nitrapyrin, Octhilinon, Furancarbonsäure, Oxytetracyclin, Probenazol, Tecloftalam.

Als Beispiele für Insektizide, Akarizide und Nematizide seien genannt:
Abamectin, Acephat, Acetamiprid, Acrinathrin, Alanycarb, Aldicarb, Alphamethrin, Amitraz, Avermectin, AZ 60541, Azadirachtin, Azinphos A, Azinphos M, Azocyclotin,
4-Bromo-2-(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, BPMC, Brofenprox, Bromophos A, Bufencarb, Buprofezin, Butocarboxin, Butylpyridaben, Cadusafos, Carbaryl, Carbofuran, Carbophenothion, Carbosulfan, Cartap, Chloethocarb, Chloretoxyfos, Chlorfluazuron, Chlormephos, N-[(6-Chloro-3-pyridinyl)-methyl]-N'-cyano-N-methyl-ethanimidamide, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin, Clothianidin,
Deltamethrin, Demeton-M, Demeton-S, Demeton-S-methyl, Diafenthiuron, Diazinon, Dichlofenthion, Dichlorvos, Dicliphos, Dicrotophos, Diethion, Diflubenzuron, Dimethoat, Dimethylvinphos, Dioxathion,
Emamectin, Esfenvalerat, Ethiofencarb, Ethofenprox, Ethoprophos,
Fenamiphos, Fenazaquin, Fenbutatinoxid, Fenobucarb, Fenothiocarb, Fenoxycarb, Fenpropathrin, Fenpyrad, Fenpyroximat, Fenvalerate, Fipronil, Fluazuron, Flucycloxuron, Flucythrinat, Flufenoxuron, Flufenprox, Fluvalinate, Fonophos, Formothion, Fosthiazat, Fubfenprox, Furathiocarb,
HCH, Heptenophos, Hexaflumuron, Hexythiazox,
Imidacloprid, Iprobenfos, Isazophos, Isofenphos, Isoprocarb, Isoxathion, Ivermectin, Lambda-cyhalothrin, Lufenuron,
Mecarbam, Mevinphos, Mesulfenphos, Metaldehyd, Methacrifos, Methamidophos, Methidathion, Methiocarb, Methomyl, Metolcarb, Milbemectin, Monocrotophos, Moxidectin,
Naled, NC 184, Nitenpyram,
Oxamyl, Oxydeprofos,
Permethrin, Phosalon, Phosmet, Phosphamidon, Pirimicarb, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyrimidifen, Pyriproxifen, Quinalphos,
Salithion, Sebufos, Silafluofen, Sulfotep,
Tebufenozide, Tebufenpyrad, Tebupirimiphos, Teflubenzuron, Tefluthrin, Temephos, Terbam, Tetrachlorvinphos, Thiacloprid, Thiafenox, Thiamethoxam, Thiodicarb, Thiofanox, Thiomethon, Thuringiensin, Tralomethrin, Transfluthrin, Triarathen, Triazuron, Trichlorfon, Triflumuron, Trimethacarb,
Vamidothion, XMC, Xylylcarb, Zetamethrin.

Als Beispiele für Molluskizide seien Metaldehyd und Methiocarb genannt.

Als Beispiele für Herbizide seien genannt:
Anilide, wie z.B. Diflufenican und Propanil; Arylcarbonsäuren, wie z.B. Dichlorpicolinsäure, Dicamba und Picloram; Aryloxyalkansäuren, wie z.B. 2,4-D, 2,4-DB, 2,4-DP, Fluroxypyr, MCPA, MCPP und Triclopyr; Aryloxy-phenoxy-alkansäureester, wie z.B. Diclofop-methyl, Fenoxaprop-ethyl, Haloxyfop-methyl und Quizalofop-ethyl; Azinone, wie z.B. Chloridazon und Norflurazon; Carbamate, wie z.B. Chlorpropham, Desmedipham, Phenmedipham und Propham; Chloracetanilide, wie z.B. Alachlor, Metazachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Fluometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bromoxynil, Dichlobenil und Ioxynil; Oxyacetamide, wie z.B. Mefenacet; Sulfonylharnstoffe, wie z.B. Amidosulfuron, Bensulfuron-methyl, Chlorimuron-ethyl, Chlorsulfuron, Cinosulfuron, Metsulfuronmethyl, Nicosulfuron, Primisulfuron, Pyrazosulfuron-ethyl, Thifensulfuron-methyl, Triasulfuron und Tribenuron-methyl; Thiolcarbamate, wie z.B. Butylate, Cycloate, Diallate, EPTC, Esprocarb, Molinate, Prosulfocarb und Triallate; Triazine, wie z.B. Atrazin, Cyanazin, Simazin, Simetryne, Terbutryne und Terbutylazin; Triazinone, wie z.B. Hexazinon, Metamitron und Metribuzin; Sonstige, wie z.B. Aminotriazol, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate, Tridiphane, Sulcotrione und Propoxycarbazone-Sodium. Desweiteren seien 4-Amino-N-(1,1-dimethylethyl)-4,5-dihydro-3-(1-metylethyl)-5-oxo-1H-1,2,4-triazole-1-carboxamid und Benzoesäure-2-((((4,5-dihdydro-4-methyl-5-oxo-3-propoxy-1H-1,2,4-triazol-1-yl)carbonyl)-amino)sulfonyl)-methylester genannt.

Als Beispiele für Pflanzenwuchsregulatoren seien Chlorcholinchlorid und Ethephon genannt.

Als Zusatzstoffe, die in der wässrigen Suspension der erfindungsgemäßen Formulierungen enthalten sein können, kommen Emulgatoren, Dispergiermittel, Polyvinylalkohol, Schutzkolloide, Entschäumer, Konservierungsmittel und Verdicker in Betracht. Dabei enthalten die Suspensionen einen oder mehrere der Zusatzstoffe.

Als Emulgatoren und Dispergiermitel kommen hierbei vorzugsweise nicht-ionische und anionische Stoffe mit oberflächenaktiven Eigenschaften in Betracht.

Als Beispiele für nicht-ionische Emulgatoren seien die unter den Bezeichnungen Pluronic PE 10 100 (Fa. BASF) und Atlox 4913 (Fa. Uniqema) bekannten Produkte genannt. Ferner infrage kommen Tristyryl-phenol-ethoxylate und N-Alkyl-pyrrolidone. Als Beispiele für anionische Emulgatoren seien Ligninsulfonate, Naphthalinsulfonsäure-Formaldehyd-Kondensationsprodukte, das unter der Bezeichnung Baykanol SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor SLK und Soprophor 4D 384 (Fa. Rhodia) speziell genannt seien.

Als Schutzkolloide kommen alle üblicherweise für diesen Zweck in Pflanzenbehandlungsmitteln einsetzbaren Stoffe in Betracht. Vorzugsweise verwendbar sind Polyvinylalkohole, Ligninsulfonate, Cellulosederivate, Gummi arabicum, Gemische von Polyvinylalkohol und Gummi arabicum, Polyvinylpyrrolidone, Polyacrylate, Polymethacrylate sowie Kondensationsprodukte von Naphthalinsulfonsäuren mit Formaldehyd.

Als Verdicker kommen alle üblicherweise für diesen Zweck in Pflanzenbehandlungsmitteln einsetzbaren Stoffe infrage. Bevorzugt sind Kelzan^{®} (thixotropes Verdickungsmittel auf Xanthan-Basis), Kieselsäuren und Attapulgit.

Als Konservierungsmittel kommen alle üblicherweise für diesen Zweck in Pflanzenbehandlungsmitteln vorhandenen Substanzen in Betracht. Als Beispiele genannt seien Preventol^{®} (Bayer AG) und Proxel^{®}.

Als Entschäumer kommen alle üblicherweise für diesen Zweck in Pflanzenbehandlungsmitteln einsetzbaren Stoffe infrage. Vorzugsweise genannt seien Silan-Derivate, wie Poly-dimethylsiloxane und Magnesiumstearat.

In der wässrigen Suspension der erfindungsgemäßen Formulierungen können außerdem auch einer oder mehrere, bei Raumtemperatur flüssige, agrochemische Wirkstoffe enthalten sein.

Die Zusammensetzung der erfindungsgemäßen Mikrokapsel-Formulierungen kann innerhalb eines größeren Bereiches variiert werden. Der Anteil der dispersen, verkapselten Phase in Bezug auf die gesamte Formulierung liegt im Allgemeinen zwischen 10 und 40 Gew.-%, vorzugsweise zwischen 15 und 35 Gew.-%.

Die Mikrokapseln bestehen aus Kapselhülle und Kapselinhalt. Die Kapselhüllen besitzen im Allgemeinen eine Wandstärke zwischen 5 und 20 Nanometer (= nm), vorzugsweise zwischen 5 und 12 Nanometer. Die Größe der Mikrokapseln kann innerhalb eines bestimmten Bereiches variiert werden. So liegt der mittlere Durchmesser der Mikrokapseln im Allgemeinen zwischen 1 und 5 µm, vorzugsweise zwischen 2 und 4µm. Der mittlere Durchmesser ist so definiert, dass 50 % der Masse aller Teilchen kleiner und 50 % größer sind als dieser Wert.

Die Zusammensetzung des Kapselinhaltes kann ebenfalls innerhalb eines bestimmten Bereiches variiert werden. Im Inneren der Mikrokapseln sind im Allgemeinen
- zwischen 50 und 100 Gew.-%, vorzugsweise zwischen 70 und 100 Gew.-% an Penetrationsförderer, und
- zwischen 0 und 50 Gew.-%, vorzugsweise zwischen 0 und 30 Gew.-% an Zusatzstoffen
enthalten.

In der wässrigen Phase der erfindungsgemäßen Mikrokapsel-Formulierungen kann der Anteil an den einzelnen Bestandteilen innerhalb eines größeren Bereiches variiert werden. So liegen die Konzentrationen
- an festen, agrochemischen Wirkstoffen im Allgemeinen zwischen 5 und 40 Gew.-%, vorzugsweise zwischen 10 und 35 Gew.-%,
- an Zusatzstoffen im Allgemeinen zwischen 2 und 15 Gew.-%, vorzugsweise zwischen 3 und 12 Gew.-%,
- an Wasser im Allgemeinen zwischen 30 und 70 Gew.-%, vorzugsweise zwischen 40 und 60 Gew.-% und
- an agrochemischen Wirkstoffen, die bei Raumtemperatur flüssig sind, im Allgemeinen zwischen 0 und 35 Gew.-%, vorzugsweise zwischen 0 und 30 Gew.-%.

Die Herstellung der erfindungsgemäßen Mikrokapsel-Formulierungen erfolgt in der Weise, dass man
- zunächst eine Mikroverkapselung durchgeführt und
- die erhaltene Mikrokapsel-Dispersion gegebenenfalls nach teilweisem oder vollständigen Entfernen der flüssigen Phase
- mit einer Suspension der gewünschten Zusammensetzung vermischt.

Bei der Durchführung des erfindungsgemäßen Verfahrens kommen vorzugsweise alle diejenigen Komponenten in Betracht, die bereits im Zusammenhang mit der Beschreibung der erfindungsgemäßen Mikrokapsel-Formulierungen als bevorzugt genannt wurden. Dabei werden die Komponenten in solchen Mengenverhältnissen eingesetzt, dass in den resultierenden Formulierungen die Konzentrationen an den einzelnen Bestandteilen in den bereits genannten Bereichen liegen.

Im ersten Schritt des erfindungsgemäßen Verfahrens geht man im Allgemeinen so vor, dass man ein Gemisch aus mindestens einem Penetrationsförderer, mindestens einem Poly-Isocyanat und Zusatzstoffen unter intensivem Rühren in einer wässrigen Phase aus Schutzkolloid, gegebenenfalls im Gemisch mit einem oder mehreren Emulgatoren, und Wasser dispergiert. Dabei kann das Verhältnis von Penetrationsförderer zu Isocyanat in einem bestimmten Bereich variiert werden. Auf 1 Gew.-Teil an Penetrationsförderer setzt man im Allgemeinen zwischen 0,005 und 0,05 Gew.-Teile, vorzugsweise zwischen 0,005 und 0,04 Gew.-Teile an Isocyanat ein.

Die Temperaturen können bei der Herstellung dieser Mischung in einem bestimmten Bereich variiert werden. Im Allgemeinen arbeitet man bei Temperaturen zwischen 10°C und 100°C, vorzugsweise zwischen 20°C und 90°C.

Die im ersten Schritt hergestellte Dispersion wird im zweiten Schritt des erfindungsgemäßen Verfahrens unter langsamen Rühren mit mindestens einem Diamin, Polyamin, Dialkohol, Polyalkohol und/oder Aminoalkohol versetzt und dann bis zur Beendigung der eintretenden Mikroverkapselung weitergerührt.

In einer besonderen Variante des Verfahrens wird Di- bzw. Polyamin dadurch erzeugt, dass man im ersten Schritt eingesetztes Isocyanat mit Wasser zur Reaktion bringt, und das entstehende Di- bzw. Polyamin dann mit dem verbliebenen Poly-Isocyanat reagieren lässt. In diesem Fall erübrigt sich die gesonderte Zugabe von Amin.

Bei der Durchführung dieses zweiten Schrittes des erfindungsgemäßen Verfahrens kann das Verhältnis von Isocyanat zu Amin-Komponente bzw. Alkanol-Komponente in einem bestimmten Bereich variiert werden. Im Allgemeinen setzt man auf 1 mol an Isocyanat 0,8 bis 1,5 Äquivalente an Amin-Komponente bzw. Alkanol-Komponente ein. Bevorzugt wählt man die Mengen an Isocyanat und Amin bzw. Alkanol so, dass äquimolare Mengen an Isocyanat- und Amino-Gruppen bzw. Hydroxyl-Gruppen vorhanden sind.

Die Reaktionstemperaturen können bei der Durchführung der zweiten Stufe des erfindungsgemäßen Verfahrens innerhalb eines bestimmten Bereiches variiert werden. Im Allgemeinen arbeitet man bei Temperaturen zwischen 40°C und 80°C, vorzugsweise zwischen 50°C und 70°C.

Im dritten Schritt des erfindungsgemäßen Verfahrens wird die zuvor hergestellte Mikrokapsel-Dispersion entweder direkt oder nach vorherigem Einengen mit einer Suspension aus mindestens einem festen, agrochemischen Wirkstoff, Zusatzstoffen und gegebenenfalls einem oder mehreren weiteren bei Raumtemperatur flüssigen, agrochemischen Wirkstoffen verrührt. Wenn die Mikrokapsel-Dispersion eingeengt werden soll, so erfolgt dieses vorzugsweise bei tiefen Temperaturen unter vermindertem Druck.

Bei den Suspensionen, mit denen die Mikrokapsel-Dispersionen im dritten Schritt des erfindungsgemäßen Verfahrens verrührt werden, handelt es sich um Suspensionskonzentrate von agrochemischen Wirkstoffen. Diese Konzentrate enthalten neben Wirkstoff auch Wasser und Zusatzstoffe.

Als Zusatzstoffe kommen dabei Verdicker, Konservierungsmittel, Entschäumer und Dispergiermittel in Betracht. Vorzugsweise verwendbar sind diejenigen Substanzen, die bereits im Zusammenhang mit der Beschreibung der erfindungsgemäßen Mikrokapsel-Suspensionen als bevorzugte Verdicker, Konservierungsmittel, Entschäumer und Dispergiermittel genannt wurden. Als agrochemische Wirkstoffe kommen dabei diejenigen in Frage, die bereits im Zusammenhang mit der Beschreibung der erfmdungsgemäßen Mikrokapsel-Dispersionen als agrochemische Bestandteile der wässrigen Phase genannt wurden.

Die Mengenverhältnisse, in denen Mikrokapsel-Dispersion und Suspensionskonzentrat miteinander vermischt werden, können innerhalb eines größeren Bereiches variiert werden. Im Allgemeinen setzt man die Komponenten in solchen Verhältnissen ein, dass auf 1 Gew.-Teil an agrochemischem Wirkstoff zwischen 0,3 und 4 Gew.-Teile, vorzugsweise zwischen 0,5 und 3 Gew.-Teile an Penetrationsförderer in mikroverkapselter Form vorhanden sind.

Die Temperaturen können bei der Durchführung des dritten Schrittes des erfindungsgemäßen Verfahrens wiederum innerhalb eines bestimmten Bereichs variiert werden. Im Allgemeinen arbeitet man bei Temperaturen zwischen 10°C und 50°C, vorzugsweise zwischen 10°C und 40°C.

Das erfindungsgemäße Verfahren wird im Allgemeinen unter Atmosphärendruck durchgeführt.

In der zuvor angegebenen Weise lassen sich erfindungsgemäße Mikrokapsel-Formulierungen herstellen, in denen bereits alle Komponenten enthalten sind, die zur Anwendung benötigt werden. Es ist aber nicht zwingend erforderlich, die nach dem zweiten Schritt erhaltenen Mikrokapsel-Dispersionen noch zusätzlich mit Wirkstoff-Suspensions-Konzentraten zu versetzen. Stattdessen kann auch die nach dem zweiten Schritt erhaltene Mikrokapsel-Dispersion zu einem späteren Zeitpunkt im Tankmix-Verfahren zu einer handelsüblichen Suspension von einem oder mehreren agrochemischen Wirkstoffen hinzugefügt werden.

Die erfindungsgemäßen Mikrokapsel-Formulierungen eignen sich hervorragend zur Applikation der enthaltenen agrochemischen Wirkstoffe auf Pflanzen und/oder deren Lebensraum. Sie gewährleisten ein effektives Eindringen der enthaltenen agrochemischen Wirkstoffe in die zu behandelnden Pflanzen, da die Penetrationsförderer ihre volle Wirksamkeit entfalten.

Die erfindungsgemäßen Mikrokapsel-Formulierungen können entweder als solche oder nach vorherigem Verdünnen mit Wasser in der Praxis eingesetzt werden. Die Anwendung erfolgt dabei nach üblichen Methoden, also z.B. durch Gießen, Verspritzen oder Versprühen.

Die Aufwandmenge an den erfindungsgemäßen Mikrokapsel-Formulierungen kann innerhalb eines größeren Bereiches variiert werden. Sie richtet sich nach den jeweiligen agrochemischen Wirkstoffen und nach deren Gehalt in den Mikrokapsel-Formulierungen.

Die Erfindung wird durch die folgenden Beispiele veranschaulicht.

### Herstellungsbeispiele

### Beispiel 1

Eine Mischung aus 215 g Ethylhexyllaurat und 4,8 g Toluylendiisocyanat wird mit Hilfe eines Dispergators bei 10 000 Upm innerhalb von einer Minute in 227 g einer 1 gew.-%igen Lösung von Polyvinylalkohol (Mowiol 26-88^{®}) in Wasser im Gemisch mit 0,5 g eines Silikonentschäumers bei 23°C dispergiert. Danach werden 1,9 g einer 50 gew.-%igen Lösung von Diethylentriamin in Wasser zugegeben. Das resultierende Reaktionsgemisch wird innerhalb von zwei Stunden auf 70°C aufgeheizt und unter langsamem Rühren weitere vier Stunden auf 70°C gehalten. Nach dem anschließenden Abkühlen auf Raumtemperatur werden 50 g einer 2 gew.-%igen Lösung von Kelzan S^{®} (Verdicker auf Xanthan-Basis) in Wasser und 0,9 g eines Konservierungsmittels (Proxel GXL^{®}) hinzugefügt. Man erhält auf diese Weise 500 g einer Mikrokapselformulierung mit einem Ethylhexyllaurat-Gehalt von 43 Gew.-% und einer mittleren Partikelgröße von 3,9 µm.

### Beispiel 2

Eine Mischung aus 215 g Ethylhexyllaurat, 10,0 g Emulgator L3 (N-Dodecyl-pyrrolidon) und 6,9 g Toluylendiisocyanat wird mit Hilfe eines Dispergators bei 10 000 UpM innerhalb von einer Minute in 217,5 g einer 1 gew.-%igen Lösung von Polyvinylalkohol (Mowiol 26-88^{®}) in Wasser im Gemisch mit 0,5 g eines Silikonentschäumers bei 23°C dispergiert. Das resultierende Reaktionsgemisch wird innerhalb von zwei Stunden auf 70°C aufgeheizt und unter langsamem Rühren weitere vier Stunden auf 70°C gehalten. Nach dem anschließenden Abkühlen auf Raumtemperatur werden 50 g einer 2 gew.-%igen Lösung von Kelzan S^{®} (Verdicker auf Xanthan-Basis) in Wasser hinzugefügt. Man erhält auf diese Weise 500 g einer Mikrokapselformulierung mit einem Ethylhexyllaurat-Gehalt von 43 Gew.-% und einer mittleren Partikelgröße von 2,1 µm.

### Beispiel 3

Eine Mischung aus 1 290 g Rapsöl, 6,45 g Renex 36^{®} (Polyethylenoxid-Alkylether) und 22 g Toluylendiisocyanat wird mit Hilfe eines Dispergators bei 10 000 UpM innerhalb von einer Minute in 1 442 g einer 1 gew.-%igen Lösung von Polyvinylalkohol (Mowiol 26-88^{®}) in Wasser im Gemisch mit 0,6 g eines Silikonentschäumers bei 11°C dispergiert. Danach werden 8,7 g einer 50 gew.-%igen Lösung von Diethylentriamin in Wasser zugegeben. Das resultierende Reaktionsgemisch wird innerhalb von einer Stunde auf 70°C aufgeheizt und unter langsamem Rühren weitere vier Stunden auf 70°C gehalten. Nach dem anschließenden Abkühlen auf Raumtemperatur werden 225 g einer 2 gew.-%igen Lösung von Kelzan S^{®} (Verdicker auf Xanthan-Basis) in Wasser und 5,5 g eines Konservierungsmittels (Proxel GXL^{®}) hinzufügt. Man erhält auf diese Weise 3 000 g einer Mikrokapselformulierung mit einem Rapsöl-Gehalt von 32 Gew.-% und einer mittleren Partikelgröße von 3,2 µm.

### Beispiel 4

Eine Mischung aus 135 g Rapsölmethylester, 0,07 g Emulgator L3 (N-Dodecylpyrrolidon) und 2,5 g Toluylendiisocyanat wird mit Hilfe eines Dispergators bei 10 000 Upm innerhalb von einer Minute in 138,8 g einer 1 gew.-%igen Lösung von Polyvinylalkohol (Mowiol 26-88^{®}) in Wasser im Gemisch mit 0,06 g eines Silikonentschäumers bei 15°C dispergiert. Danach werden 0,49 g einer 50 gew.-%igen Lösung von Diethylentriamin in Wasser zugegeben. Das resultierende Reaktionsgemisch wir innerhalb von einer Stunde auf 70°C aufgeheizt und unter langsamem Rühren weitere vier Stunden auf 70°C gehalten. Nach dem anschließenden Abkühlen auf Raumtemperatur werden 15 g einer 2 gew.-%igen Lösung von Kelzan S^{®} (Verdicker auf Xanthan-Basis) in Wasser sowie je 0,3 g Preventol D2^{®} und Preventol D7^{®} (Konservierungsmittel) hinzugefügt. Man erhält auf diese Weise 300 g einer Mikrokapselformulierung mit einem Rapsölmethylester-Gehalt von 45 Gew.-% und einer mittleren Partikelgröße von 2,9 µm.

### Beispiel 5

Eine Mischung aus 120 g Rapsölethylester und 3,71 g einer Lösung aus 44,7 Gew.-% Toluylendiisocyanat, 35,3 Gew.-% Desmodur^{®} 44 V 20 L und 20 Gew.-% Solvesso 200^{®} wird mit Hilfe eines Dispergators bei 8 000 Upm innerhalb von einer Minute in 153,1 g einer 1 gew.-%igen Lösung von Polyvinylalkohol (Mowiol 26-88^{®}) in Wasser im Gemisch mit 0,06 g eines Silikonentschäumers bei 15°C dispergiert. Das resultierende Reaktionsgemisch wird innerhalb von einer Stunde auf 70°C aufgeheizt und unter langsamem Rühren weitere vier Stunden auf 70°C gehalten. Nach dem anschließenden Abkühlen auf Raumtemperatur werden 7,5 g Wasser und 15 g einer 2 gew.-%igen Lösung von Kelzan S^{®} (Verdicker auf Xanthan-Basis) in Wasser sowie je 0,3 g Preventol D2^{®} und Preventol D7^{®} (Konservierungsmittel) hinzugefügt. Man erhält auf diese Weise 300 g einer Mikrokapselformulierung mit einem Rapsöl-ethylester-Gehalt von 40 Gew.-% und einer mittleren Partikelgröße von 2,5 µm.

### Beispiel 6

Eine Mischung aus 120 g Rapsölethylester, 2,1 g Toluylendiisocyanat und 1,6 g 4,4'-Methylen-bis-(cyclohexyl)-isocyanat wird mit Hilfe eines Dispergators bei 8 000 Upm innerhalb von einer Minute in 153,1 g einer 1 gew.-%igen Lösung von Polyvinylalkohol (Mowiol 26-88^{®}) in Wasser im Gemisch mit 0,06 g eines Silikonentschäumers bei 17°C dispergiert. Das resultierende Reaktionsgemisch wird innerhalb von einer Stunde auf 70°C aufgeheizt und unter langsamem Rühren weitere vier Stunden auf 70°C gehalten. Nach dem anschließenden Abkühlen auf Raumtemperatur werden 22,5 g einer 2 gew.-%igen Lösung von Kelzan S^{®} (Verdicker auf Xanthan-Basis) in Wasser sowie je 0,3 g Preventol D2^{®} und Preventol D7^{®} (Konservierungsmittel) hinzugefügt. Man erhält auf diese Weise 300 g einer Mikrokapselformulierung mit einem Rapsölethylester-Gehalt von 40 Gew.-% und einer mittleren Partikelgröße von 2,5 µm.

### Beispiel 7

Eine Lösung aus 120 g Rapsölethylester, 2,50 g Desmodur T 80^{®} (Bayer AG) und 1,21 g Hexamethylen-1,6-diisocyanat wird bei 23°C mit Hilfe eines Dispergators bei 8 000 Upm (Umdrehungen pro Minute) innerhalb von einer Minute in einer 0,9 gew.-%igen Lösung von Polyvinylalkohol (Mowiol 26-88^{®}) in Wasser im Gemisch mit 0,06 g eines Silikonentschäumers dispergiert. Das Gemisch wird innerhalb von einer Stunde auf 70°C aufgeheizt und dann unter langsamem Rühren weitere 4 Stunden auf 70°C gehalten. Nach dem anschließenden Abkühlen auf Raumtemperatur werden 22,5 g einer 2 gew.-%igen Lösung von Kelzan S^{®} in Wasser und 0,6 g Konservierungsmittel (0,3 g Preventol D2^{®} und 0,3 g Preventol D7^{®}) hinzugefügt. Man erhält auf diese Weise 300 g einer Mikrokapsel-Formulierung mit einer mittleren Partikelgröße von 2,51 µm und einer durchschnittlichen theoretischen Wanddicke von 12 nm.

### Beispiel 8

451 g Tebuconazol werden mit 30 g eines Ethylenoxid-Propylenoxid-Blockpolymers, 1 g eines Silikonentschäumers und 296 Wasser vermischt. Die Mischung wird zunächst grob zerkleinert und dann mit Hilfe einer Perlmühle auf den gewünschten Feinheitsgrad gemahlen. Nach Zugabe von 50 g Glycerin, 2 g Konservierungsmittel (Preventol D7^{®}) und 50 g einer 2,0 gew.-%igen wässrigen Lösung von Kelzan S^{®} erhält man 1 000 g eines Suspensionskonzentrates mit einem Tebuconazol-Gehalt von 500 g/l.

### Beispiel 9

Unter langsamem Rühren werden 40 g des Suspensionskonzentrates gemäß Beispiel 8 sowie 40 g der Mikrokapsel-Formulierung gemäß Beispiel 7 und 10 g Propandiol, 4 g einer 2,0 gew.-%igen wässrigen Lösung von Kelzan S^{®}, 0,2 g Konservierungsmittel (Preventol D7^{®}) und 5,8 g Wasser vermischt. Man erhält auf diese Weise 100 g einer Formulierung, die 18 Gew.-% Tebuconazol und 16 Gew.-% Rapsölethylester enthält.

### Verwendungsbeispiel / Penetrationstest

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 9 µl einer Spritzbrühe der nachstehend genannten Zusammensetzung auf die Außenseite einer Kutikula appliziert.

### Spritzbrühe A

10 g der Formulierung gemäß Beispiel 9 werden mit soviel entsalztem Wasser verdünnt, dass eine Spritzbrühe entsteht, die einen Tebuconazol-Gehalt von 0,6 g/l aufweist.

### Spritzbrühe B

10 g eines handelsüblichen Tebuconazol-Suspensionskonzentrates werden mit soviel entsalztem Wasser versetzt, dass eine Spritzbrühe entsteht, die einen Tebuconazol-Gehalt von 0,6 g/l aufweist.

Nach dem Auftragen der Spritzbrühen ließ man jeweils das Wasser verdunsten, drehte dann jeweils die Kammern um und stellte sie in thermostatisierte Wannen, wobei sich unter der Außenseite der Kutikula jeweils eine gesättigte wässrige Calciumnitrat-4-hydrat-Lösung befand. Die einsetzende Penetration fand bei einer relativen Luftfeuchtigkeit von 56 % und einer eingestellten Temperatur von 25°C statt. In regelmäßigen Abständen wurden mit einer Spritze Proben entnommen und mittels HPLC auf den Gehalt an penetriertem Wirkstoff hin untersucht.

Die Versuchsergebnisse gehen aus der folgenden Tabelle hervor. Bei den angegebenen Zahlen handelt es sich um Durchschnittswerte von 8 Messungen.

**Tabelle**

| Spritzbrühe | Wirkstoffpenetration nach 2 Tagen | Standardabweichung |
|---|---|---|
| A (erfindungsgemäß) | 10,92 % | ± 2,65 % |
| B (bekannt) | 0,23% | ± 0,46 % |

## Patentansprüche

1. Mikrokapsel-Formulierungen, bestehend aus
A) einer teilchenförmigen, dispersen Phase von Mikrokapseln, die
• Hüllen aus Polyharnstoff und/oder Polyurethan in mittleren Schichtdicken zwischen 5 und 20 nm aufweisen und
• als Kapselfüllung aus
- mindestens einem Penetrationsförderer sowie
- mindestens einem Zusatzstoff ausgewählt aus der Gruppe der anionischen oder neutralen Emulgatoren und der aromatischen Kohlenwasserstoffe als Lösungsmittel,
bestehen,
und
B) einer Suspension, die
• mindestens einen festen, agrochemischen Wirkstoff,
• Zusatzstoffe,
• Wasser
enthält.

2. Verfahren zur Herstellung von Mikrokapsel-Formulierungen gemäß Anspruch 1, **dadurch gekennzeichnet, dass** man
a) in einem ersten Schritt ein Gemisch aus
• mindestens einem Penetrationsförderer,
• mindestens einem Poly-Isocyanat aus der Gruppe der aliphatischen Isocyanate, aromatischen Isocyanate, cycloaliphatischen Isocyanate und/oder dem Isocyanat der Formel 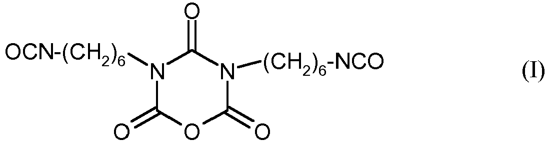
• mindestens einem Zusatzstoff ausgewählt aus der Gruppe der anionischen oder neutralen Emulgatoren und der aromatischen Kohlenwasserstoffe als Lösungsmittel
in einer wässrigen Phase aus
• einem oder mehreren Schutzkolloiden und
• Wasser
dispergiert,
b) der dabei anfallenden Mischung in einem zweiten Schritt mindestens ein Diamin, Polyamin, Dialkohol, Polyalkohol und/oder Aminoalkohol zufügt, und
c) die erhaltene Mikrokapsel-Dispersion in einem dritten Schritt mit einer Suspension aus
• mindestens einem festen, agrochemischen Wirkstoff und
• Zusatzstoffen
verrührt.

3. Verwendung von Mikrokapsel-Formulierungen gemäß Anspruch 1 zur Applikation der enthaltenen agrochemischen Wirkstoffe auf Pflanzen und/oder deren Lebensraum.

## Claims

1. Microcapsule formulations composed of
A) a particulate disperse phase of microcapsules which have
• polyurea and/or polyurethane coatings with average layer thicknesses of between 5 and 20 nm and
which are composed of,
• as capsule filling,
- at least one penetrant and,
- at least one additive selected from the group consisting of the anionic or neutral emulsifiers and the aromatic hydrocarbons as solvents,
and
B) a suspension comprising
• at least one solid agrochemical active compound,
• additives,
• water.

2. Process for the preparation of microcapsule formulations according to Claim 1, **characterized in that**
a) in a first step, a mixture of
• at least one penetrant,
• at least one polyisocyanate from the group of the aliphatic isocyanates, aromatic isocyanates, cycloaliphatic isocyanates and/or the isocyanate of the formula 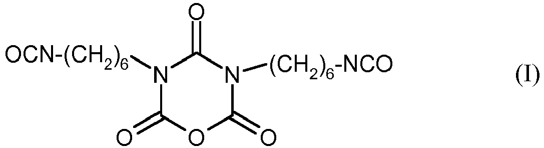
• at least one additive selected from the group consisting of the anionic or neutral emulsifiers and the aromatic hydrocarbons as solvents,
is dispersed in an aqueous phase of
• one or more protective colloids and
• water,
b) in a second step, at least one diamine, polyamine, dialcohol, polyalcohol and/or aminoalcohol is added to the resulting mixture, and
c) in a third step, the resulting microcapsule dispersion is stirred with a suspension of
• at least one solid agrochemical active compound and
• additives.

3. Use of microcapsule formulations according to Claim 1 for applying the agrochemical active compounds present to plants and/or their environment.

## Revendications

1. Formulations de microcapsules, constituées par
A) une phase particulaire, dispersée de microcapsules qui
- présentent des enveloppes en polyurée et/ou en polyuréthane présentant des épaisseurs moyennes de couche entre 5 et 20 nm et
- sont constituées, comme remplissage de capsule, par
- au moins un agent favorisant la pénétration ainsi que
- au moins un additif choisi dans le groupe des émulsifiants anioniques ou neutres et des hydrocarbures aromatiques comme solvant,
et
B) une suspension, qui contient
- au moins une substance active solide, agrochimique,
- des additifs,
- de l'eau.

2. Procédé pour la préparation de formulations de microcapsules selon la revendication 1, **caractérisé en ce que**
a) dans une première étape, on disperse un mélange constitué par
- au moins un agent favorisant la pénétration,
- au moins un polyisocyanate du groupe des isocyanates aliphatiques, des isocyanates aromatiques, des isocyanates cycloaliphatiques et/ou l'isocyanate de formule 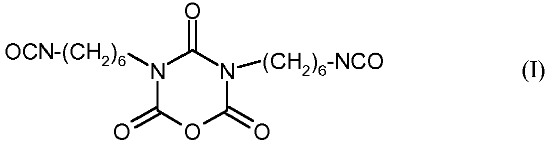
- au moins un additif choisi dans le groupe des émulsifiants anioniques ou neutres et des hydrocarbures aromatiques comme solvant dans une phase aqueuse constituée par
- un ou plusieurs colloïdes de protection et
- de l'eau
b) on ajoute au mélange ainsi obtenu, dans une deuxième étape, au moins une diamine, une polyamine, un dialcool, un polyalcool et/ou un aminoalcool et
c) dans une troisième étape, on mélange la dispersion de microcapsules obtenue avec une suspension constituée par
- au moins une substance active solide, agrochimique,
- des additifs.

3. Utilisation de formulations de microcapsules selon la revendication 1 pour l'application des substances actives agrochimiques contenues sur des plantes et/ou leur espace de vie.
